# EUROPEAN PATENT SPECIFICATION

(11) **EP 3 420 446 B1**
(45) Date of publication and mention of the grant of the patent: **11.11.2020**
(21) Application number: 17709393.7
(22) Date of filing: 27.02.2017
(51) Int. Cl.: G06F 9/30, G06F 12/14, G06F 21/60, G06F 9/34, G06F 9/46

(54) **METHOD OF SECURE MEMORY ADDRESSING**
VERFAHREN ZUR SICHEREN SPEICHERADRESSIERUNG
PROCÉDÉ D'ADRESSAGE SÉCURISÉ DE MÉMOIRE

(30) Priority: 27.02.2016 WO PCT/EP2016/000344; 27.02.2016 WO PCT/EP2016/000345
(43) Date of publication of application: 02.01.2019
(73) Proprietor: Kinzinger Automation GmbH, 76437 Rastatt (DE)
(72) Inventor: KINZINGER, Klaus, 76437 Rastatt (DE)
(74) Representative: Meyer zu Bexten, Elmar
(86) International application number: PCT/EP2017/054535
(87) International publication number: WO 2017/144731

(56) References cited:
- EP-A1- 2 211 285
- EP-A2- 0 793 179
- EP-A2- 1 764 682
- WO-A1-81/02477
- US-A- 4 525 780
- US-A- 5 280 614
- US-A1- 2001 044 891
- US-A1- 2006 020 946
- US-A1- 2008 222 397
- WICHTEL ET AL.: "MONDRIX: MEMORY ISOLATION FOR LINUX USING MONDRIAAN MEMORY PROTECTION", SOSP'05, OCTOBER 23-26, 2005, BRIGHTON, UNITED KINGDOM., 23 October 2005 (2005-10-23), - 26 October 2005 (2005-10-26), pages 31-44, XP040029779, ACM, 2 PENN PLAZA, SUITE 701 - NEW YORK USA

## Description

### Technical Field

The invention relates to a method of memory addressing as well as a corresponding data-processing apparatus, computer program, data carrier, and data structure.

### Background Art

In the context of security technology and information governance, by information security is meant the practice of preventing unauthorized access, use, disclosure, disruption, modification, inspection, recording or destruction of information. Information security of data-processing apparatuses is termed cybersecurity, computer security, or IT security. State-of-the-art cybersecurity encompasses control of physical or network access to data-processing apparatuses as well as protection from disruption or misdirection of the services they provide, data manipulation, and code injection.

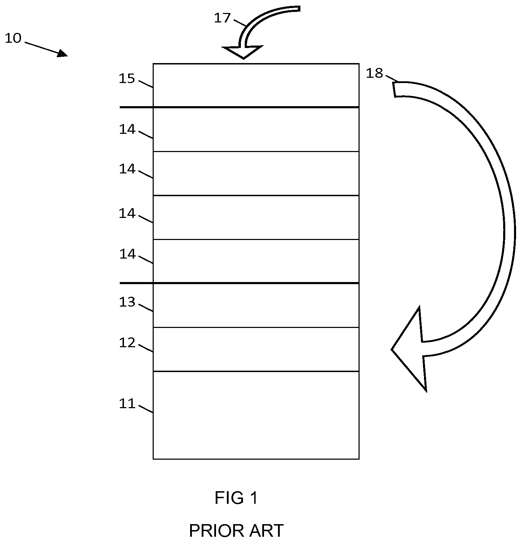

As an example of the latter class of attacks, FIG 1 illustrates the possible exploitation of a software defect in an insecure prior-art data-processing apparatus (10) graphically represented by its technology stack. As per the traditional von Neumann architecture for electronic digital computers, the prior-art apparatus (10) takes the form of a stored-program computer, that is, a computer based on a central processing unit (11) whose program instructions, as well as data, are kept in one single, uniform, read-write, random-access memory (RAM) devoid of specific security precautions.

This property is reflected in the processor's instruction set architecture (ISA), which is predominantly embodied in its instruction decoder (12). While FIG 1 depicts the instruction decoder (12) as a separate functional block atop the central processing unit (11), the former is in fact integrated within the latter rather than implemented as discrete circuitry. Interfacing to said hardware (11, 12) is the low-level software (13) constituted by drivers and further elements - such as a basic input-output system (BIOS) in case of a personal computer (PC) - as well as profound layers of the operating system (OS) which, among other tasks, configures the hardware's memory management unit (MMU) and provides task management and process scheduling capabilities.

Said hardware and basic OS functionality (11, 12, 13) constitute the foundation for any software adapted to the data-processing apparatus (10), such software typically comprising multiple layers (14) of middleware that culminate in the actual application (15). Where the software is faulty in any of said layers, an attacker - in what is known as a cyber-attack (17) - may leverage this vulnerability and cause the data-processing apparatus (10) to crash. Even more severely, to seize control of the apparatus (10), an exploit of the vulnerability could enable the attacker to maliciously bypass (18) all lower software layers of the technology stack in order to directly access the instruction decoder (12), thereby usurping unrestricted power over all resources offered by the insecure "bare-metal" hardware system (11, 12). To this end, once having breached the designated flow of control, the attacker may redirect it to machine instructions of his choosing that have been injected into or selected from memory by a technique referred to as return-oriented programming (ROP). Once such "malware" is fed to the instruction decoder (12), the data-processing apparatus (10) may exhibit unintended or unanticipated behavior, and may even become completely controlled by the attacker.

Conventional approaches to detecting or preventing code injections include marking of memory areas to the apparatus as non-executable. Another countermeasure particularly suited for buffer overflow attacks is known in the art as "stack canaries". Return address overwrites such as seen during exploitation of stack buffer overflows may further be mitigated by so-called shadow stacks. These and other techniques are employed by the artisan to maintain control-flow integrity (CFI), that is, prevent malware attacks from redirecting or hi-jacking the flow of execution of a program.

US20080222397A1, WILKERSON DANIEL SHAWCROSS ET AL, 2008-09-11, discloses a method of regulating the execution of a program by a microprocessor, said microprocessor having a plurality of data addresses, each data address having data, and said microprocessor having a plurality of instruction addresses, each instruction address having an instruction, at least one instruction being an accessing instruction for accessing data at a data address target, said microprocessor associating an owner with a data address, where said owner is a subset of said instruction addresses, having a set-owner operation taking as arguments a data address set-owner argument and a new owner set-owner argument, said set-owner operation altering the owner associated with said data address set-owner argument to be said new owner set-owner argument, said method comprising: when an accessing instruction at an accessing instruction address accesses data at a data address target, allowing the access if an access condition is met, otherwise issuing a fault, said access conditions comprising: said accessing instruction address is an element of the owner associated with said data address target, when said set-owner operation executes, allowing said set-owner operation if a set-owner condition is met, otherwise issuing a fault, said set-owner conditions comprising: at least one instruction of said set-owner operation is an element of the owner associated with said data address set-owner argument.

EP2211285A1, NAGRAVISION SA, 2010-07-28, provides for a secured data processing device comprising a processing unit, an instruction memory to hold instructions, a plurality of addressable modules in a memory address space and an address monitor, at least one of said instructions comprising at least an operation code, said memory address space being divided into regions, said plurality of addressable modules being connected to a databus, said secured data processing device being characterized in that: said operation code comprises information indicating that said instruction is exclusively applicable to at least one of said regions in the memory address space; said secured data processing device comprises information defining a range of valid addresses for each of said regions; said secured data processing device comprises means to enable access only to the at least one region in the memory address space to which said instruction is exclusively applicable.

WICHTEL ET AL.: "MONDRIX: MEMORY ISOLATION FOR LINUX USING MONDRIAAN MEMORY PROTECTION", SOSP'05, OCTOBER 23-26, 2005, BRIGHTON, UNITED KINGDOM, presents the design and an evaluation of Mondrix, a version of the Linux kernel with Mondriaan Memory Protection (MMP). MMP is a combination of hardware and software that provides efficient fine-grained memory protection between multiple protection domains sharing a linear address space. Mondrix uses MMP to enforce isolation between kernel modules which helps detect bugs, limits their damage, and improves kernel robustness and maintainability. During development, MMP exposed two kernel bugs in common, heavily-tested code, and during fault injection experiments, it prevented three of five file system corruptions. The Mondrix implementation demonstrates how MMP can bring memory isolation to modules that already exist in a large software application. It shows the benefit of isolation for robustness and error detection and prevention, while validating previous claims that the protection abstractions MMP offers are a good fit for software.

As per EP0793179A2, SUN MICROSYSTEMS INC, 1997-09-03, a processor processes a segmented to linear virtual address conversion instruction to convert segmented virtual addresses in a segmented virtual address space to a linear virtual address in a linear virtual address space. The segmented virtual address space comprises a plurality of segments each identified by a segment identifier, each segment comprising at least one page identified by a page identifier. The linear virtual address space includes a plurality of pages each identified by a page identifier. In processing the segmented to linear virtual address conversion instruction, the processor uses a plurality of segmented to linear virtual address conversion descriptors, each associated with a page in the segmented virtual address space, each segmented to linear virtual address conversion descriptor identifying the page identifier of one of the pages in the linear virtual address space. The segmented to linear virtual address conversion instruction includes a segmented virtual address identifier in the segmented virtual address space. In processing the segmented to linear virtual address conversion instruction, the processor uses the segmented virtual address identifier in the segmented to linear virtual address conversion instruction to select one of the segmented to linear virtual address conversion descriptors. After selecting a segmented to linear virtual address conversion descriptor, the processor uses the page identifier of the linear virtual address space from the selected segmented to linear virtual address conversion descriptor and the segmented virtual address identifier in the segmented to linear virtual address conversion instruction in generating a virtual address in the linear virtual address space.

The architecture of EP1764682A2, MICRONAS GMBH,2007-03-21, has two arithmetic/logic units (ALU-L, ALU-R) executing data processing, and an addressing unit (AG) generating access addresses for data to be stored in a data memory device (RAM). An address-memory arrangement (PR) stores the access addresses, where the access addresses are combined with data types of the data. The data is distributed into the arithmetic/logic units depending on the access addresses, and original data is stored as the data depending on the access addresses.

In an object-based computer system as per US5280614A, MUNROE STEVEN J ET AL,1994-01-18, each object is contained in, and each task executes in, a protection domain. Domains exist at several hierarchical domain levels, some levels having multiple discrete domains, while others have one common domain. A task may access an object if the domain in which the task is executing is the same as the domain containing the object, or if the domain in which it is executing occupies a higher hierarchical domain level than the domain containing the object. Each object includes a domain attribute, which is a numerical value defining the domain in which it is contained. The domain attribute of the currently executing task is stored in a domain register. When an attempt is made to access data within an object, the domain attribute of the object is compared with the domain attribute stored in the domain register. If the access conditions are met, access is permitted.

The digital data processing system of US4525780A, (BRATT RICHARD G ET AL,1985-06-25, has memory organized into objects containing at least operands and instructions. Each object is identified by a unique and permanent identifier code which identifies the data processing system and the object. The system uses a protection technique to prevent unauthorized access to objects by users who are identified by a subject number which identifies the user, a process of the system for executing a user's procedure, and the type of operation of the system to be performed by the user's procedure. An access control list for each object includes an access control list entry for each subject having access rights to the object and means for confirming that a particular active subject has access rights to a particular object before permitting access to the object. The system also includes stacks for containing information relating to the current state of execution of the system.

US20060020946A1, ALEXANDER WILLIAM P III ET AL, 2006-01-26, discloses a method, apparatus, and computer instructions in a processor for performing arithmetic operations. A data type associated with a particular memory location is used to determine if an operation about to be performed on the data in that location is legal. If the operation requires the data to have a required data type, a determination is made as to whether the operation is a legal operation based on the identified data type and the required data type. If the operation is not legal on the identified type, a determination is made as to whether data can be cast to change the identified data type to the required data type. The data is cast to the required data type if the data can be cast to form modified data, and the arithmetic operation is performed on the modified data. If the data cannot be cast to the required type, an exception or interrupt is generated.

A processor as per US20010044891A1, MCGRATH KEVIN JET AL,2001-11-22, supports a processing mode in which the address size is greater than 32 bits and the operand size may be 32 or 64 bits. The address size may be nominally indicated as 64 bits, although various embodiments of the processor may implement any address size which exceeds 32 bits, up to and including 64 bits, in the processing mode. The processing mode may be established by placing an enable indication in a control register into an enabled state and by setting a first operating mode indication and a second operating mode indication in a segment descriptor to predefined states. Other combinations of the first operating mode indication and the second operating mode indication may be used to provide compatibility modes for 32 bit and 16 bit processing compatible with the x86 processor architecture (with the enable indication remaining in the enabled state).

WO1981002477A1, INTEL CORP, 1981-09-03, discloses a processor for use in a data processing system capable of executing an operation by means of a hardware operator, said system having instruction objects defining an operation, and data objects, said objects stored in a memory which can be shared by a number of processors, an object-based access mechanism comprising: means for maintaining objects of a first basic type and a second basic type, each object being a representation of related information maintained in a contiguously addressed set of memory locations; said first type of object (a data segment) containing data scalar values; said second type of object (an access list) containing access descriptors which provide information for locating an object and defining the extent of access to an object associated with an access descriptor; and means in said hardware operator for ensuring that the content of a segment of said first or second type of object from which operands are obtained for execution by said hardware operator correspond to a particular one of said first or second types.

### Summary of invention

The invention as claimed is hereinafter disclosed in such a way that the technical problem with which it deals can be appreciated and the solution can be understood.

### Technical Problem

The problem to be solved is to seek an alternative to known concepts which provides the same or similar effects or is more secure.

### Solution to Problem

To elucidate the nature of the solution, reference is made to the characterizing portion of the independent claims.

### Advantageous effect of invention

The invention gives rise to efficient data processing, efficient data storage, and enhanced security.

### Brief description of drawings

FIG 1 shows a data-processing apparatus in accordance with the prior art.
FIG 2 shows a data-processing apparatus as per the invention.
FIG 3 shows a data structure used in the apparatus.
FIG 4 shows a method of addressing memory in the apparatus.
FIG 5 shows pointer and descriptor words used in the method.
FIG 6 shows a data word used in the method.
FIG 7 shows a type word used in the method.

### Description of embodiments

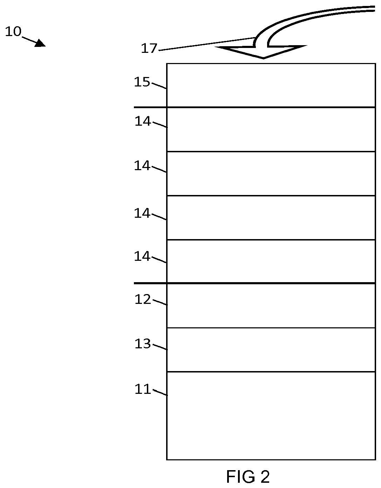

Referring to FIG 2, the invention mitigates the impact of a cyber-attack (17) by introduction of what may be considered a cybersecure ISA. By virtually swapping, in terms of their levels within the technology stack, the instruction decoder (12) for the task, process, and memory management layer, this layer (13) and the instruction decoder (12) are arranged such that the latter isolates the former from direct access by potentially malicious software, all while leaving the higher parts of the technology stack intact. In a preferred embodiment, recognizing the indispensability of task separation for the design of a fully secure apparatus (10), the scheduler is even at least partly implemented in hardware and said part - being in charge of all process switching activities of the scheduler-directly wired to the memory management unit (MMU).

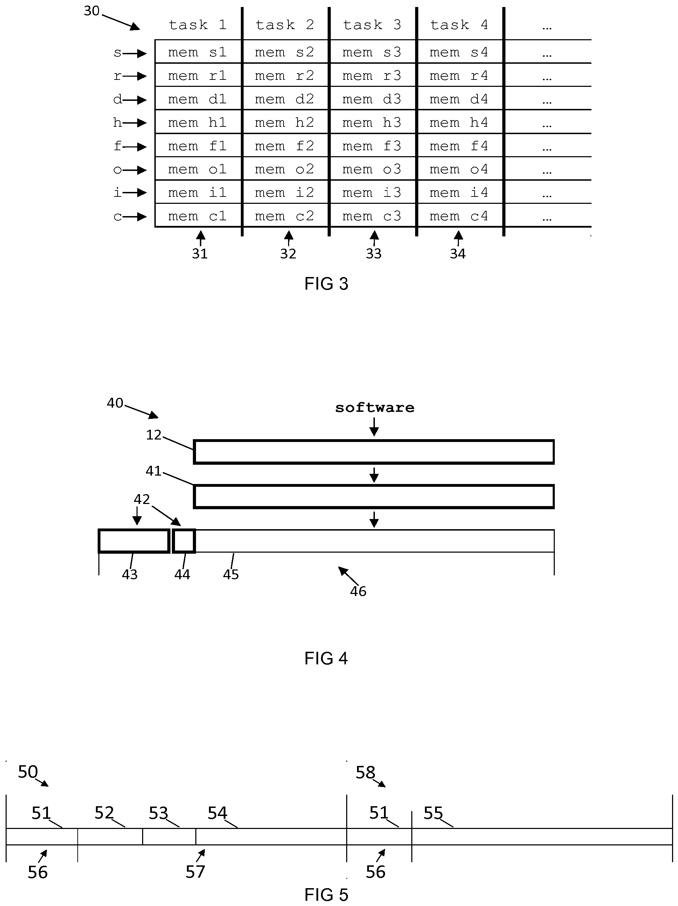

Where the data-processing apparatus (10) takes the form of a concurrent system, this approach allows for a virtual memory layout (30) as exemplified in FIG 3. The structure (30) shown is laid out in a two-dimensional grid of at least four columns of virtual memory pages, each column being uniquely associated with one among the tasks (31, 32, 33, 34). In an alternative embodiment that extends upon this concept, any column associated with a multi-threaded task would split into multiple columns, each being associated with an execution thread of the respective task (31, 32, 33, 34) and effectively rendering the grid three-dimensional. When hereinafter reference is made to a task (31, 32, 33, 34), such a task may be understood to comprise any number of threads, the generalizations necessary for multi-threaded task processing being regarded as obvious and part of the scope of the invention.

Vertically, the grid of the present example comprises eight rows, each row being uniquely associated with a memory segment. For any among the tasks (31, 32, 33, 34), one such segment remains hidden to and inaccessible for the software itself, and contains a stack (s) exclusively dedicated to subroutine return addresses and controlled by hardware. Especially in a stack machine, that task (31, 32, 33, 34) may also entail a working stack (r) that stores subroutine contexts, call, return, and local variables, and intermediate computational results. An ancillary data stack (d) is optional. Finally, the task (31, 32, 33, 34) could possess any number of heap (h), file (f), write-only channel output (o), or read-only channel input (i) segments as needed.

A mandatory code (c) segment, hidden to and inaccessible for the software itself, serves as read-only input to the instruction decoder (12), otherwise being protected from reading and writing. This feature may be considered an implementation of the Harvard computer architecture as it imposes distinct code and data address spaces, rendering the memory layout (30) invulnerable to code injection.

Attention is now directed to FIG 4, which highlights the address resolution per the proposed ISA. When the central processing unit (11), while performing one of the tasks (31, 32, 33, 34), executes an instruction involving a pointer into one of the memory segments (r, d, h, f, o, i, c), it decodes the instruction by means of the instruction decoder (12), as would in and of itself be expected in a conventional system. Characteristically of this embodiment however, the instruction decoder (12) now generates an address within virtual memory by means of a safe pointer, dereference, or indirection operator (41) that is preferably implemented in hardware. The ISA defines a pointer instruction subset specifically dedicated to this purpose.

Once generated, the virtual address (45) is augmented, such as through concatenation, by an identifier (43) of the task (31, 32, 33, 34) and an identifier (44) of the memory segment (r, d, h, f, o, i, c), both identifiers being essentially hardware-controlled (42), identifier (43) by the scheduler, and identifier (44) by the safe pointer operator (41). Based on this augmented virtual address (46), the pointer may finally be dereferenced via the memory management unit (MMU) and its data accessed safely and securely. By design, each task (31, 32, 33, 34) thus benefits from its own data privacy sphere as well as full memory access integrity and control flow integrity and hence resides in what in the art is known as a "trust zone" that is maintained by a per-task virtual processing scheme (as opposed to known coarser - and more vulnerable - two-virtual-processor schemes).

In a preferred embodiment explained regarding FIG 5, the apparatus (10) takes the form of a stack machine, wherein pointers are always kept on a protected working stack (r) and never in unprotected memory or file (d, h, f, o, i). In this scenario, the central processing unit (11), when executing the instruction, extracts the pointer (57) from a typed pointer word (50) on the working stack (r), the typed pointer word (50) comprising information (56) regarding the pointer type - to be evaluated by the safe pointer operator (41) - and protection status - to be checked by the instruction decoder (12) - and further information necessary for the low-level operating system layer (13) e. g. to safeguard memory accesses from hazards like "dangling pointers" or to organize inter-task channel communications. The pointer (57) in turn comprises a second type word (52) indicating the type of the data it references (either data by value or a further pointer) as well as a handle (53) referring to a virtual page within the destination segment (r, d, h, f, o, i, c) and an index (54) referring, within said page, to the memory location of that data record which holds the binary data word referenced by the pointer (57). Of these components, only the index (54) information can be loaded into or retrieved from the pointer (57) by software. This capability proves useful for structures that contain pointer values, as may be used in C or similar programming languages.

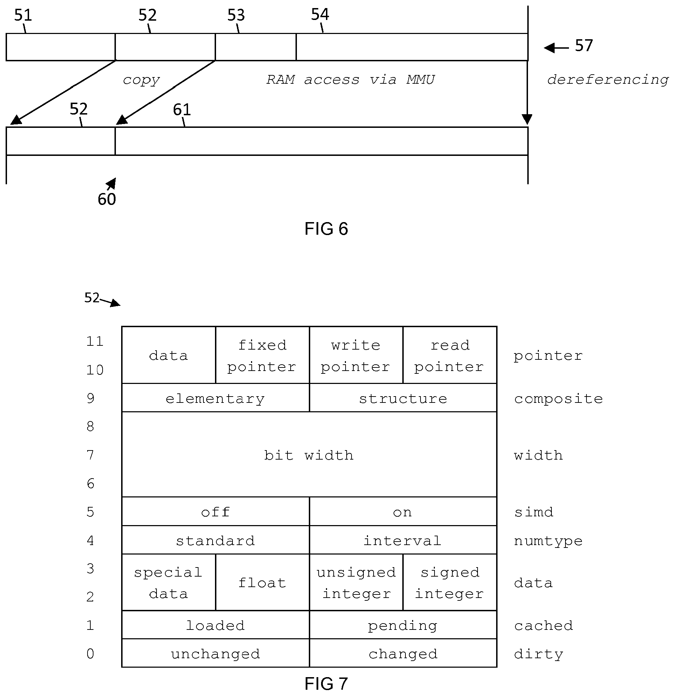

The eminent benefit of the type word (52) is best gathered from FIG 6 where that word is employed to assemble what could be called a typed data word (60): Upon dereferencing the pointer (57) by loading the "raw", that is type-less, data word (61) - via the memory management unit - from RAM or any other memory location onto the stack, the result is complemented with the type word (52), which can simply be copied from the pointer (57) that referenced it. The binary data loaded to the stack is now complete with information on how to handle and interpret it. Hence, metaphorically speaking, the pointer (57) "knows" the data type it references.

Since type information is henceforth contained in data space (r) as opposed to code space (c), CPU execution may be guided by type, reducing the required instruction set to a minimum. The resulting ability to use universal standard code for all - even vector or otherwise special - data types confers extreme flexibility to the data processing apparatus (10). In programming languages and type theory, such provision of a single interface to entities of different types is known as polymorphism.

FIG 7 demonstrates how even a compact 12-bit type word (52) may convey an abundance of type information. For instance, in the draft depicted, bits 10 and 11 of the type word (52) indicate whether the ensuing data word (61) contains binary data by value or a pointer (57) to either data or some other pointer. This type information is respected by all instructions of the data processing apparatus (10) which in a preferred embodiment are designed to either target data words ("data instructions") or pointer words ("pointer instructions") or on none of both and which, when applied to the "wrong" type of word, raise an exception. By this device, numerical data held on the stack (r) is protected from being mistaken as a pointer and pointers are protected from being overwritten or tampered with by operations not specifically designed for this purpose within the instruction set architecture (ISA), the operating system task (OS) being an exception of this generic safety-of-operation rule. Where that pointer (57) represents a range of addresses within memory rather than a fixed address, bits 10 and 11 would also designate whether the pointer (57) have read/write or read only or write only permissions, the latter two options offering hardware support for e. g. ring buffers for inter-task channel communication via hardware-coupled - and hence functionally safe - write and read pointer pairs. A subsequent descriptor word (58) on the stack may arithmetically describe the address range itself in terms of certain structural properties - e. g., linear as in an array or cyclic as in a ring buffer -, specify an incremental stride to be used when advancing the pointer (57) throughout the range, the size of the range, or its base address (55). Herein, stride and size should preferably be expressed as multiples of the width of the respective data, that is, the size of the record holding them. Note that these parameters, when considered in their entirety, implicitly define the boundaries of the represented address range. Based on this knowledge, the hardware may practically guarantee functional safety of all pointer accesses including protection from unauthorized reading or overwriting. In the context of abstract data types, the outlined concept would commonly be referred to as a smart pointer.

In the draft at hand, bit 9 of the type word (52) marks the - contained or referencing - data as being either of an elementary or composite, further structured type. In the former case, the type word (52) may also provide guidance on aspects like the following:
- the width of the data expressed in a unit of raw information such as bits (bits 6, 7, 8),
- whether the data constitutes a vector unit or sub-unit of multiple data points (bit 5) preferably to be processed with a parallel single SIMD instruction of the central processing unit (11),
- whether the data type is standard or a - preferably nullable - interval type (bit 4),
- whether the data is a floating-point or an unsigned or signed integer number or otherwise special - such as a character, index of a pointer, function pointer, semaphore or inter-task communication channel - (bits 2, 3),
- whether the data has been loaded from a buffer or cache memory into the stack - and hence is valid - or such load is pending ("lazy" loading bit 1), and
- whether the data has been newly added to or changed on the stack since last loaded from buffer or cache memory - and hence is out-of-sync with said buffer or cache memory ("dirty" bit 0).

### Industrial applicability

The invention may be applied, inter alia, throughout the semiconductor industry.

## Claims

1. Method (40) of addressing memory in a data-processing
apparatus (10) comprising,
when a central processing unit (11), while performing a task (31, 32, 33, 34) of the apparatus (10), executes an instruction involving a pointer (57) to or a direct memory address located in a segment (r, d, h, f, o, i, c) of the memory:
decoding the instruction by means of an instruction decoder (12), and
generating an address (45) within the memory of said task by means of a pointer operator (41) operating on the pointer (57) or using a direct memory address (45),
**characterized in**
extending the address (45) by an identifier (43) of the task (31, 32, 33, 34) or an identifier (44) of the segment (r, d, h, f, o, i, c), or both identifiers (43, 44), said identifier or identifiers being hardware-controlled (42), and
translating the extended address (46) by a memory management unit (MMU) to a corresponding physical address.

2. Method (40) of claim 1 wherein
the apparatus (10) maintains a working stack (r) and
the central processing unit (11), when executing the instruction involving a pointer, extracts the pointer (57) from a pointer word (50) on said working stack (r), the pointer word (50) further comprising type information (56) to be processed by the hardware and / or an operating system (11, 12, 13) of the apparatus (10).

3. Method (40) of claim 2 comprising,
upon dereferencing the pointer (57) for data load to the stack,
loading onto the stack a binary data word (61) referenced by the pointer (57) and
complementing the data word (61) with a type word (52), the type word (52) being copied from the pointer (57) and henceforth indicating to the hardware and/or operating system (11, 12, 13) the type of the data word (61).

4. Method (40) of claim 3 wherein
the data word (61) is referenced by means of a handle (53) referring to a page within one of the segments (r, d, h, f, o, i, c) and an index (54) referring, within the page, to a data record holding the data word (61).

5. Method (40) of any of claims 2 to 4 wherein
the type word (52) - marked (56) in claim 2 - indicates whether the data word (61) contains data by value or contains a pointer (57) referencing either data by value or a further pointer or contains a descriptor belonging to a pointer and
whether that either contained or referencing data is of an elementary or composite type.

6. Method (40) of claim 5 wherein,
if the type word (52) indicates that the type is an elementary data word, the type word (52) also indicates any or all of the following:
a width of the data expressed in a unit of information such as bits,
whether the data constitutes a vector of multiple data points to be processed with a single instruction of the central processing unit (11),
whether the data is of a standard or - nullable - interval type, whether the data is of a numeric type, being a floating-point or either unsigned or signed integer number, or is user-defined or otherwise special,
such as a character, index of a pointer, function pointer, semaphore or inter-task communication channel,
whether the data has been loaded into the stack from a buffer or cache memory or such a load is pending,
whether the data has been added to or changed on the stack since last its last load from buffer or cache memory.

7. Method (40) of claim 5 wherein,
if the type word (52) indicates that the data word (61) contains the further pointer (57),
the pointer word (50) further comprises information for safeguarding memory accesses from hazards such as dangling pointers or for organizing inter-task channel communications.

8. Method (40) of claim 5 wherein,
if the type word (52) further indicates that the type is a descriptor belonging to a pointer,
the data word (61) contains a descriptor (55) which describes any or all of the following:
the pointer arithmetic in terms of being either linear ("array pointer") or cyclic ("ring buffer pointer"),
a stride, expressed as a multiple of the increment,
a base address and a size of the range allowed for access by the pointer (57).

9. Data-processing apparatus (10) having
memory,
a central processing unit (11),
an instruction decoder (12),
a low-level operating system (LLOS) layer comprising at least task, process, and memory management facilities and implemented in software, in hardware, or in a mixture of both (13),
and
means adapted to execute the steps of the method (40) of any of claims 1 to 8.

10. Data-processing apparatus (10) of claim 9 wherein
the memory management facilities are configured such that the instruction decoder (12) isolates the LLOS layer (13) from any direct software access.

11. Data-processing apparatus (10) of claim 10 wherein
the software comprises multiple layers (14) and
an application (15) based upon the layers (14).

12. Computer program comprising instructions 1 which when executed cause the apparatus (10) of claim 10 or 11 to execute the steps of the method (40) of any of claims 1 to 8.

13. Computer-readable data carrier having stored thereon the computer program of claim 12.

14. Computer-implemented data structure (30) for use in the method (40)
of any of claims 1 to 8, the structure (30) having
a virtually at least two-dimensional grid layout of columns and rows of memory pages,
each among the columns being uniquely associated with one among several tasks (31, 32, 33, 34) of the apparatus (10) and each among the rows being uniquely associated with one among several segments (r, d, h, f, o, I, c) of the memory being hardware-controlled return stack (s), working stack (r), data stack (d), heap (h), file (f), channel output (o), channel input (i), or code (c) segment wherein,
for each task (31, 32, 33, 34) among the tasks (31, 32, 33, 34), the column associated with that task (31, 32, 33, 34) comprises multiple levels, each being associated with an execution thread of the respective task (31, 32, 33, 34).

## Patentansprüche

1. Verfahren (40) zum Adressieren von Speicher in einer Datenverarbeitungsvorrichtung (10), **gekennzeichnet durch**:
Wenn eine zentrale Prozessoreinheit (11), während sie einen Task (31, 32, 33, 34) der Vorrichtung (10) ausführt, eine Anweisung ausführt, die einen Zeiger (57) auf eine oder eine direkte Speicheradresse beinhaltet, die sich in einem Segment (r, d, h, f, o, i, c) des Speichers befindet:
Dekodieren der Anweisung mit Hilfe eines Anweisungsdekodierers (12) und Erzeugen einer Adresse (45) innerhalb des Speichers des genannten Tasks mittels eines Zeigeroperators (41), der auf den Zeiger (57) wirkt oder Verwenden einer direkten Speicheradresse (45),
Erweitern der Adresse (45) um eine Kennung (43) des Tasks (31, 32, 33, 34) oder um eine Kennung (44) des Segments (r, d, h, f, o, i, c) oder um beide Kennungen (43, 44), wobei die besagten Kennungen hardwaregesteuert sind (42), und
Übersetzen der erweiterten Adresse (46) durch eine Speicherverwaltungseinheit (MMU) in eine entsprechende physikalische Adresse.

2. Verfahren (40) nach Anspruch 1, bei dem
die Vorrichtung (10) einen Arbeitsstapel (r) unterhält und
die zentrale Prozessoreinheit (11) bei der Ausführung der einen Zeiger betreffenden Anweisung den Zeiger (57) aus einem Zeigerwort (50) auf dem Arbeitsstapel (r) extrahiert, wobei das Zeigerwort (50) ferner Typinformationen (56) umfaßt, die von der Hardware und/oder einem Betriebssystem (11, 12, 13) der Vorrichtung (10) zu verarbeiten sind.

3. Verfahren (40) nach Anspruch 2,
bei dem nach Dereferenzierung des Zeigers (57) zum Laden von Daten auf den Stapel
auf den Stapel ein binäres Datenwort (61) geladen wird, auf das der Zeiger (57) verweist, und
das Datenwort (61) mit einem Typwort (52) ergänzt wird, wobei das Typwort (52) aus dem Zeiger (57) kopiert wird und fortan der Hardware und/oder dem Betriebssystem (11, 12, 13) den Typ des Datenwortes (61) anzeigt.

4. Verfahren (40) nach Anspruch 3, bei dem
das Datenwort (61) referenziert wird mittels eines Handle (53), das sich auf eine Seite innerhalb eines der Segmente (r, d, h, f, o, i, c) bezieht, und eines Index (54), der sich innerhalb der Seite auf einen Datensatz bezieht, der das Datenwort (61) enthält.

5. Verfahren (40) nach einem der Ansprüche 2 bis 4, wobei
das - in Anspruch 2 mit (56) markierte - Typwort (52) angibt, ob das Datenwort (61) einen Datenwert enthält oder einen Zeiger (57) enthält, der entweder einen Datenwert oder einen weiteren Zeiger referenziert oder einen zu einem Zeiger gehörenden Deskriptor enthält, und ob diese entweder enthaltenen oder referenzierenden Daten von einem elementaren oder zusammengesetzten Typ sind.

6. Verfahren (40) nach Anspruch 5, wobei,
wenn das Typwort (52) angibt, dass es sich bei dem Typ um ein elementares Datenwort handelt, das Typwort (52) auch eines oder alle der folgenden Merkmale angibt:
eine Datenbreite, ausgedrückt in einer Informationseinheit wie z.B. Bits, ob die Daten einen Vektor aus mehreren Datenwerten darstellen, die mit einer einzigen Anweisung der zentralen Prozessoreinheit (11) verarbeitet werden sollen,
ob die Daten von einem Standard- oder - nullbaren - Intervalltyp sind,
ob die Daten von einem numerischen Typ sind, d.h. eine Gleitkommazahl oder entweder vorzeichenlose oder vorzeichenbehaftete ganze Zahl, oder ob sie benutzerdefiniert oder anderweitig speziell sind, wie z.B. ein Zeichen, der Index eines Zeigers, Funktionszeigers, Semaphors oder Intertask-Kommunikationskanals,
ob die Daten aus einem Puffer- oder Cache-Speicher in den Stapel geladen wurden oder ein solches Laden ansteht,
ob die Daten seit dem letzten Laden aus dem Puffer- oder Cache-Speicher zum Stapel hinzugefügt oder auf dem Stapel geändert wurden.

7. Verfahren (40) nach Anspruch 5, bei dem,
wenn das Typwort (52) angibt, dass das Datenwort (61) den weiteren Zeiger (57) enthält,
das Zeigerwort (50) ferner Informationen zum Schutz von Speicherzugriffen vor Gefahren wie hängenden Zeigern oder zur Organisation von Inter-Task-Kanal-Kommunikationen enthält.

8. Verfahren (40) nach Anspruch 5, wobei,
wenn das Typenwort (52) ferner angibt, dass der Typ ein zu einem Zeiger gehörender Deskriptor ist, das Datenwort (61) einen Deskriptor (55) enthält, der eines oder alle der folgenden Merkmale beschreibt:
die Zeigerarithmetik als entweder linear ("Array-Zeiger") oder zyklisch ("Ringpuffer-Zeiger"),
eine Schrittweite, ausgedrückt als ein Vielfaches des Inkrements,
eine Basisadresse und eine Größe des Bereichs, auf den der Zeiger (57) zugreifen darf.

9. Datenverarbeitungsvorrichtung (10) mit
Speicher,
einer zentralen Prozessoreinheit (11),
einem Anweisungsdekoder (12), einer Low-Level-Betriebssystem (LLOS)-Schicht, die zumindest Task-, Prozess- und Speicherverwaltungseinrichtungen umfasst, die in Software, in Hardware oder in einer Mischung aus beiden (13) implementiert sind,
und
Mitteln, die geeignet sind, die Schritte des Verfahrens (40) nach einem der Ansprüche 1 bis 8 auszuführen.

10. Datenverarbeitungsvorrichtung (10) nach Anspruch 9, bei der die Speicherverwaltungseinrichtungen so konfiguriert sind, dass der Anweisungsdecoder (12) die LLOS-Schicht (13) von jedem direkten Softwarezugriff isoliert.

11. Datenverarbeitungsvorrichtung (10) nach Anspruch 10, wobei
die Software mehrere Schichten (14) und
eine auf den Schichten (14) basierende Anwendung (15) umfasst.

12. Computerprogramm mit Abweisungen, die bei ihrer Ausführung bewirken, dass die Vorrichtung (10) nach Anspruch 10 oder 11 die Schritte des Verfahrens (40) nach einem der Ansprüche 1 bis 8 ausführt.

13. Computerlesbarer Datenträger, auf dem das Computerprogramm aus Anspruch 12 gespeichert ist.

14. Computerimplementierte Datenstruktur (30) zur Verwendung in dem Verfahren (40) nach einem der Ansprüche 1 bis 8, wobei die Struktur (30) ein virtuell mindestens zweidimensionales Gitterlayout von Spalten und Zeilen von Speicherseiten aufweist, wobei jede der Spalten eindeutig einem von mehreren Tasks (31, 32, 33, 34) der Vorrichtung (10) zugeordnet ist und jede der Zeilen eindeutig einem von mehreren Speichersegmenten (r, d, h, f, o, i, c) zugeordnet ist, einem hardware-gesteuerten Aufrufstapel (s), Arbeitsstapel (r), Datenstapel (d), Heap (h), Datei (f), Kanalausgabe (o), Kanaleingabe (i) oder Codesegment (c), wobei
für jeden Task (31, 32, 33, 34) unter den Tasks (31, 32, 33, 34) die diesem Task (31, 32, 33, 34) zugeordnete Spalte mehrere Ebenen umfasst, von denen jede einem Ausführungs-Thread des jeweiligen Tasks (31, 32, 33, 34) zugeordnet ist.

## Revendications

1. Méthode (40) d'adressage mémoire dans un appareil de traitement de données (10) comprenant,
lorsqu'une unité centrale de traitement (11), tout en effectuant une tâche (31, 32, 33, 34) de l'appareil (10), exécute une instruction impliquant un pointeur (57) vers ou une adresse mémoire directe située dans un segment (r, d, h, f, o, i, c) de la mémoire:
- décoder l'instruction au moyen d'un décodeur d'instructions (12), et
- générer une adresse (45) dans la mémoire de ladite tâche au moyen d'un opérateur de pointeur (41) agissant sur le pointeur (57) ou utilisant une adresse mémoire directe (DMA) (45),
**caractérisée par** l'extension de l'adresse (45) par un identificateur (43) de la tâche (31, 32, 33, 34) ou un identifiant (44) du segment (r, d, h, f, o, i, c), ou les deux identifiants (43, 44), lequel ou lesquels étant contrôlés par le hardware (42), et
- traduisant l'adresse étendue (46) par une unité de gestion de mémoire (MMU) en une adresse physique correspondante.

2. Méthode (40) de la revendication 1 dans laquelle
l'appareil (10) maintient une pile de travail (r) et
l'unité centrale de traitement (11), lors de l'exécution de l'instruction impliquant un pointeur, extrait le pointeur (57) d'un mot pointeur (50) sur ladite pile de travail (r), le mot pointeur (50) comprenant en outre des informations type (56) à traiter par le hardware et/ou un système d'exploitation (11, 12, 13) de l'appareil (10).

3. Méthode (40) de la revendication 2 comprenant,
lors de la déréférencement du pointeur (57) pour le chargement de données sur la pile:
- le chargement sur la pile d'un mot machine binaire (61) référencé par le pointeur (57) et
- le complément du mot machine (61) avec un mot type (52), le mot type (52) étant copié à partir du pointeur (57) et indiquant désormais au hardware et/ou au système d'exploitation (11, 12, 13) le type du mot machine (61).

4. Méthode (40) de la revendication 3 dans laquelle
le mot machine (61) est référencé au moyen d'un indicateur (53) se référant à une page à l'intérieur d'un des segments (r, d, h, f, o, i, c) et un index (54) se référant, à l'intérieur de la page, à un enregistrement de données contenant le mot machine (61).

5. Méthode (40) de l'une des revendications 2 à 4 dans laquelle
le mot type (52) - marqué (56) dans la revendication 2 - indique si le mot machine (61) contient des données par valeur ou contient un pointeur (57) référençant soit des données par valeur soit un autre pointeur ou contient un descripteur appartenant à un pointeur et si ces données contenues ou référencées sont de type élémentaire ou composite..

6. Méthode (40) de la revendication 5 dans laquelle,
si le mot type (52) indique que le type est un mot machine élémentaire, le mot type (52) indique également l'un ou l'ensemble des éléments suivants:
- une largeur des données exprimée dans une unité d'information telle que des bits,
- si les données constituent un vecteur de plusieurs points de données à traiter avec une seule instruction de l'unité centrale de traitement (11),
- si les données sont de type standard ou à intervalle - annulable -,
- si les données sont de type numérique, étant un nombre entier à virgule flottante ou non signé ou signé, ou est défini par l'utilisateur ou est spécial d'une autre manière, tel qu'un caractère, un index de pointeur, un pointeur de fonction, un sémaphore ou un canal de communication inter-tâches,
- si les données ont été chargées dans la pile à partir d'une mémoire tampon ou d'une mémoire cache ou si un tel chargement est en cours,
- si les données ont été ajoutées ou modifiées dans la pile depuis le dernier chargement à partir de la mémoire tampon ou de la mémoire cache.

7. Méthode (40) selon la revendication 5, dans laquelle,
si le mot type (52) indique que le mot machine (61) contient le pointeur supplémentaire (57),
le mot pointeur (50) comprend en outre des informations pour protéger les accès à la mémoire contre les dangers tels que les pointeurs pendants (*Dangling pointers)* ou pour organiser les communications entre les canaux de tâches.

8. Méthode (40) selon la revendication 5, dans laquelle,
si le mot type (52) indique en outre que le type est un descripteur appartenant à un pointeur,
le mot machine (61) contient un descripteur (55) qui décrit l'un ou l'ensemble des éléments suivants:
- l'arithmétique du pointeur en termes de linéarité ("array pointer") ou de cyclicité ("ring buffer pointer"),
- une démarche, exprimée en tant qu'un multiple de l'incrément,
- une adresse de base et une taille de la plage autorisée à l'accès par le pointeur (57)

9. Appareil de traitement de données (10) comportant
- une mémoire,
- une unité centrale de traitement (11),
- un décodeur d'instructions (12),
- une couche de système d'exploitation de bas niveau (LLOS) comprenant au moins des moyens de gestion de tâches, de processus et de mémoire mis en oeuvre dans le logiciel, dans le hardware ou dans un mélange des deux (13), et
- des moyens adaptés pour exécuter les étapes du procédé (40) de l'une des revendications 1 à 8 quelconque.

10. Appareil de traitement de données (10) selon la revendication 9, dans lequel
les installations de gestion de la mémoire sont configurées de telle sorte que le décodeur d'instructions (12) isole la couche LLOS (13) de tout accès direct au logiciel.

11. Appareil de traitement de données (10) selon la revendication 10, dans lequel
le logiciel comprend plusieurs couches (14) et
une application (15) basée sur les couches (14).

12. Programme informatique comprenant des instructions qui, lorsqu'elles sont exécutées, font que l'appareil (10) de la revendication 10 ou 11 exécute les étapes de la méthode (40) de l'une des revendications 1 à 8.

13. Support de données lisible par ordinateur sur lequel est stocké le programme informatique de la revendication 12.

14. Structure de données mise en œuvre par ordinateur (30) destinée à être utilisée dans la méthode (40) de l'une des revendications 1 à 8 quelconque, la structure (30) ayant
une disposition en grille pratiquement au moins bidimensionnelle de colonnes et de lignes de pages de mémoire, chacune des colonnes étant associée de manière unique à une tâche parmi plusieurs (31, 32, 33, 34) de l'appareil (10) et chacune des lignes étant associée de manière unique à un segment parmi plusieurs (s, r, d, h, f, o, i), c) de la mémoire étant un segment de pile de retour (s), de pile de travail (r), de pile de données (d), de tas (h), de fichier (f), de sortie de canal (o), d'entrée de canal (i) ou de code (c) contrôlé par le hardware, dans lequel,
pour chaque tâche (31, 32, 33, 34) parmi les tâches (31, 32, 33, 34), la colonne associée à cette tâche (31, 32, 33, 34) comprend plusieurs niveaux, chacun étant associé à un fil d'exécution de la tâche respective (31, 32, 33, 34).
